# EUROPEAN PATENT SPECIFICATION

(11) **EP 3 896 822 B1**
(45) Date of publication and mention of the grant of the patent: **27.03.2024**
(21) Application number: 20465520.3
(22) Date of filing: 16.04.2020
(51) Int. Cl.: H02J 50/12, H02J 50/60, H04L 25/49

(54) **METHOD AND A DEVICE FOR DETECTING THE PRESENCE OF A PORTABLE OBJECT**
VERFAHREN UND VORRICHTUNG ZUR DETEKTION DER PRÄSENZ EINES TRAGBAREN OBJEKTS
PROCÉDÉ ET DISPOSITIF POUR DÉTECTER LA PRÉSENCE D'UN OBJET PORTABLE

(43) Date of publication of application: 20.10.2021
(73) Proprietor: Continental Automotive Technologies GmbH, 30165 Hannover (DE)
(72) Inventor: Craciun, Serban, 81737 Munich (DE)
(74) Representative: Continental Corporation

(56) References cited:
- US-A1- 2016 268 842
- US-A1- 2019 296 590
- KIRUTHIGA G ET AL: "Wireless charging for low power applications using Qi standard", 2016 INTERNATIONAL CONFERENCE ON COMMUNICATION AND SIGNAL PROCESSING (ICCSP), IEEE, 6 April 2016 (2016-04-06), pages 1180-1184, XP033002978, DOI: 10.1109/ICCSP.2016.7754338 [retrieved on 2016-11-22]

## Description

The invention relates to a method and a device for detecting the presence of a portable object (e.g. a mobile phone or key fob or coin etc), especially of its presence near a charger inside a vehicle.

E.g. US9124142B2, DE102011082623B3 of Continental Automotive GmbH disclose inductive charging of a mobile phone in a vehicle. Continental offers inductive charging of a mobile phone in a vehicle e.g. as visible online in https://www.continental-automotive.com/en-gl/Passenaer-Cars/Vehicle-Networking /Connectivity-Telematics/Smart-Device-Integration/Wireless-Power-Charging-(WP C)
US 2016/268842 A1 discloses a free resonance analog ping for wireless power transmission.

An object of the invention is to allow reliable, efficient and safe detection of a portable object (e.g. a mobile phone or key fob or coin etc), especially of its presence near or on a (e.g. Qi) charger inside a vehicle. This object is respectively achieved by the teaching of the independent patent claims.

Embodiments of the invention allow a reliable, efficient and safe detection of a portable object (e.g. a mobile phone or key fob or coin etc), wherein by the first and the (different, e.g. stronger) second analog ping and check of the related Q factor (antenna detuning factor) during both analog pings, it can be clarified whether the object might be a mobile phone and/or chargeable device, thus avoiding a stronger digital ping which without presence of a mobile phone and/or chargeable device, might disturb (e.g. regarding emission, or e.g. an analog radio which might show a brief disturbing sound).

The dependent patent claims describe some advantageous embodiment of the invention.

According to another advantageous development of the invention, a device transmits the digital ping with comparably high power, to make sure that a smartphone on MFST and/or chargeable device is detected even if smartphone coupling is not optimal as e.g. smartphone not precisely placed centrally on MFST, but this digital ping is too strong for some devices as e,g, a key fob and/or could be heared in an AM radio (especially if no smartphone on MFST as smartphone would adsorb most energy) .

Preferably the digital ping is triggered with ~4.5V and the first analog ping with less than 1 00mV and the second analog ping with 0.3 - 0.8V.

Preferably the power of the first and second analog ping is set to a level reducing radio emissions below ICNIRP limits also if no smartphone and/or portable object with a wireless charging coil is present.

Preferably the first analog ping and the second analog ping are narrower and/or lower pulses than the digital ping, especially wherein both are delta pulses.

Preferably only in case of a decision that a portable object is a mobile phone and/or a portable object with a wireless charging coil, and preferably after further verification and/or communication, charging of the portable object is started.

Preferably that a sent ping stronger than one or two named sent pings can mean that it is sent for a longer time and/or sent with more power than the other sent ping(s).

Embodiments of the invention are described below with reference to the enclosed figures:
FIG. 1 shows a vehicle with a device for detecting presence of a nearby portable object,
FIG. 2 shows a first analog pulse and a second analog pulse for detecting presence of a nearby portable object, and a digital pulse transmitted only if a measured characteristic (a transmission Q parameter) of the portable objects are those of e.g. a mobile phone and/or chargeable device,
FIG. 3 shows some details of an embodiment of a device for detecting and classifying a portable object,
FIG. 4 shows an example of a curve of a digital and/or (less strong / narrower and/or lower) analog pings,
FIG. 5 shows an example of the steps of a portable object detection according to an embodiment of the invention, especially for Qi charging.

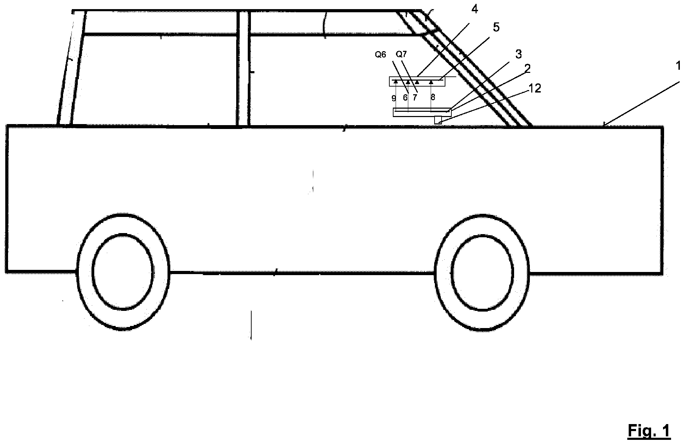

FIG. 1 shows a vehicle 1 with a device 2 (e.g. a Qi charger and/or comprising a coil 3, and/or a smartphone) for
- detecting (with a transmitted first analog pulse (ping) 6 and a transmitted second analog pulse (ping) 7) presence (nearby a charger device 2) of a portable object 4 (comprising a coil 5),
- deciding if a detected portable object 4 shows a characteristic (e.g. Q factor Q6 > Q factor Q7) of a mobile phone and/or chargeable device depending on the transmission quality factor Q6 of the first analog pulse and the transmission quality factor Q7 of the second analog pulse 7,
   and only if the detected nearby portable object 4 might be a mobile phone and/or chargeable device then transmitting a digital pulse (ping) 8,
- and e.g. communicating with and/or inductive charging 9 of the portable object 4 if (e.g. after further verification and communication) it is detected as a mobile phone and/or chargeable device .

In other words, a procedure for detecting a portable object 4 could be
- transmitting with a coil 3 of a device 2 a first analogue ping 6 with (e.g. much) lower power than a possible later digital ping 8,
- detecting by (e.g. by Q (Q6) factor) measurement with a measuring and controlling device 12 (shown only schematically), if any portable object appears possibly present on or nearby the (charging) device 2 (then Q factor and/or antenna resonance detuning can be increased or decreased compared to no present object)
- transmitting with a coil 3 of the device 2 a stronger second analog ping 7 with same or preferably lower energy and/or power than a possible later digital ping 8 but stronger (more energy and/or power and/or wider) than the first analog ping 6,
- detecting (e.g. by Q (Q7) factor measurement) which portable object 4 and/or which kind of portable object 2 seems present on or nearby the device 2, i.e.
   a) if a measured Q factor change (detuning indicator) related to the second analog ping 7 is less than the Q factor change (detuning indicator) related to the first analog ping 6 (as a smartphone would adsorb more energy at higher sending power) then it is decided that a smart device (or something with similar Q characteristic) is located present on or nearby the device 2, and (only then) the device 2 continues with a digital ping 8, whereas
   b) if the Q factor related to / during the second analog ping 7 is (exactly or within a predetermined threshold) the same as related to / during the first analog ping 6 then no digital ping 8 is necessary or transmitted.

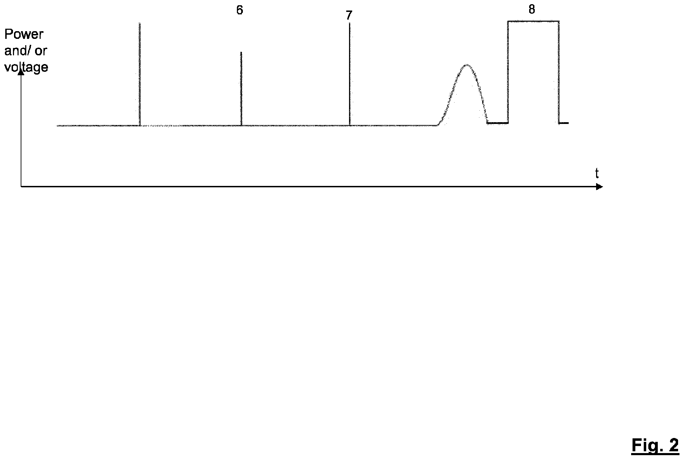

Fig 2 illustrates, that this can help to reduce disturbing maximum (electromagnetic field) emissions of this process for detecting presence (and e.g. type, e.g. mobile phone or the like) of a portable object near the (charging and/or communication) device 2, as the strength (electromagnetic field energy and/or power and or duration) of the transmitted first analog pulse (ping) 6 and of the transmitted second analog pulse (ping) 7 can be much lower than of a transmitted a digital pulse (ping) 8, and as a digital pulse (ping) 8 transmitted to a detected nearby possible mobile phone portable object 4 (or an object with insofar only detected similar (Q) characteristic) might be adsorbed by a mobile phone better than by a coin and/or key fob etc.

This might reduce e.g. AM etc radio noise and/or influence on present humans.

The first and second Q-factor measurements pulses (pings) 6, 7 preferably are much less strong (lower in power (e.g. transmitted energy) and/or duration time t) than the digital ping 8.

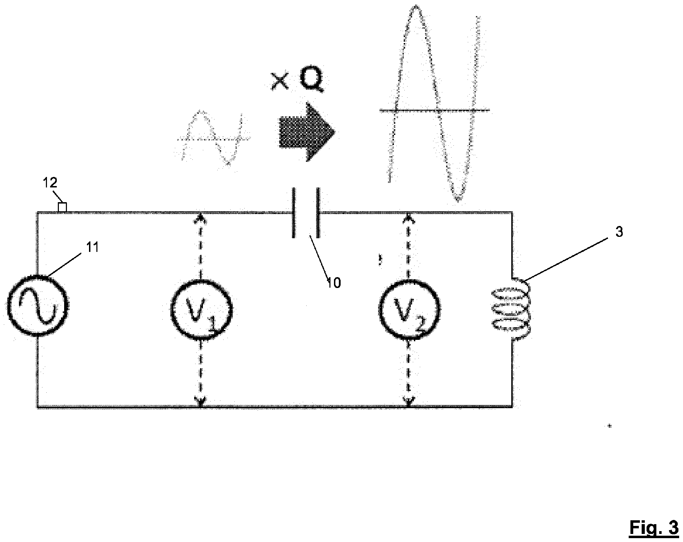

E.g. for a digital ping, an inverter for a coil 2 shown in Fig.3 for producing it can be supplied with ~4.5V, whereas for a first Q-measurement (Q6) with first analog ping 6 it could be supplied with less than 100mV, and for a second Q measurement (Q7) with a second analog ping 6 it could be supplied with 0.3 - 0.8V, in order to keep the EM emission at very low level during the first and second analog pings (pulses) 6, 7, whereas it can be stronger / higher for the digital ping (pulse 8) that would be adsorbed to a higher degree by a mobile phone portable object 4 than by a coin or key fob etc portable object 4.

Fig. 3 shows some details of a possible embodiment of the invention in a device 2, with a coil 3 and a resonance capacitor 10 and an energy/voltage source 11 for creating analog pings 6, 7 and a digital ping 8 (and possibly for charging a portable object 4).

Qi specifications describe a few methods for object detection (OD) and foreign object detection (FOD). For OD, short analog pings (here: 6, 7) and then checking the resonance shift or capacitance change can be used. For FOD, the most used method is to measure the quality factor (Q-factor) of the transmitter coil.

The Q-factor measurement (here with a first analog pulse 6 and with a second analog pulse 7) shall be performed with very low (and/or briefly) injected (into the coil 2) voltage (V1, V2) in order to not trigger rectifier diodes of a receiving RX device (e.g. 4) and to charge a filter capacitor (this can affect the Q-factor measurement).

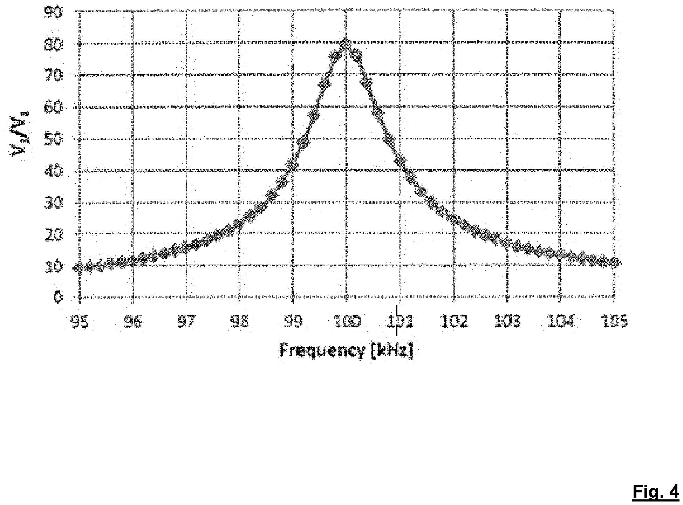

A scanning (analog and/or digital) ping phase could e.g. generally look like in Fig. 4; an analog ping can be lower and/or narrower than a stronger (bigger and/or longer) digital ping.

There are specific requirements (acc. ICNIRP), which limit the electromagnetic field which can be generated to provide protection against known adverse human health effects and/or other problems.

A wireless power charger device 2, theoretically could but should not reach the limits of ICNIRP during a digital ping 8, if there is no RX receiver (of e.g. a mobile phone portable object) placed on the surface (metallic parts from receiver and internal ferrite shielding foil will limit the electromagnetic field which can leak).

Analog pings 6,7 and Q factor measurement can be performed by generating low levels of magnetic field, but a digital ping shall be performed with a specific field level.

In order to ensure the ICNIRP requirements, digital ping shall be generated only when there is 100% (or alternatively near 100%) certainty that on the surface of the charger / device 2 a mobile phone and/or Qi compatible RX device is present. The presented solution is intended to solve the issue by detecting if on the surface of the wireless charger device 2, there is a smartphone and/or Qi receiver 2 or a (different) foreign object 2.

The proposed solution acc to an embodiment of the invention implies to introduce a second Q-factor measurement scanning, but with higher (alternative lower with vice versa comparison) level of injected voltage V1 in Fig. 3.

The first Q-factor measurement (a1) is performed with low emitted electromagnetic field of a first analog ping 6 (e.g. to not trigger the diode bridge of a Qi RX device 2) and the second measurement Q2 is performed with a second analog ping with a higher level of electromagnetic field (to trigger the diode bridge of Qi RX device 2).

If a (different) foreign object (FO, e.g. no smartphone or something without Qi coil/receiver, e.g. a coin) is placed on surface, then the both Q-factor measurements shall be the same, but if a RX device (smartphone and/or device with a Qi charging receiver/coil) is present then the Q7 measurement value will be lower than Q6 due to additional loses in RX electronics.

In this situation, if there are differences between both analog pings related Q factor measurements it can be decided to enable the digital ping 8, else not.

Possible advantages of this method are:
- low complexity: simple and robust;
- good detection of Qi RX device vs. foreign metallic object;
- requirements of ICNIRP standard can be achieved.

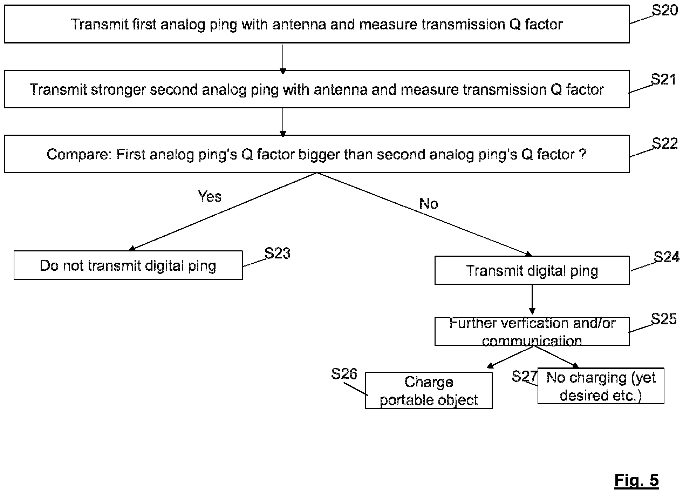

FIG. 5 shows an example of the steps of a portable object detection according to an embodiment of the invention, especially for Qi charging.

After (step S 20) transmitting an first analog ping 6 with an antenna 3 and measuring the related transmission Q factor Q6,
and after (step S 21) transmitting a second analog ping 7 with an antenna 3 and measuring the related transmission Q factor Q7,
the first analog ping's 6 Q factor Q6 and the second analog ping's 7 transmission Q factor Q7 are compared (step S22).

If the first analog ping's 6 Q factor Q6 is bigger than or equal to the second analog ping's 7 transmission Q factor Q7 no digital ping is transmitted (step S23).

If the first analog ping's 6 Q factor Q6 is smaller than the second analog ping's 7 transmission Q factor Q7 a digital ping is transmitted (step S23).

After (or without) further verification and or communication (of the device with the portable object), either wireless (especially Qi) charging of the portable object is allowed or started (Step 26) or no charging of the portable object is allowed or started (Step 27, e.g. as the portable object does not want charging or as the further verification has detected a problem).

## Claims

1. Method for detecting the presence of a portable object (4) near a charger inside a vehicle (1),
the detection being achieved by
- transmitting with at least one coil (3) a first analog ping (6),
**characterized by**
- transmitting with at least one coil (3) a second analog ping (7) which is differently strong than the first analog ping (6),
- comparing the transmission quality factor (Q6) of the first analog ping (6) and the transmission quality factor (Q7) of the second analog ping (7),
- deciding that a portable object (4) is present which is a mobile phone and/or a portable object with a wireless charging coil (5)
if the transmission quality factor (Q7) of the stronger analog ping (7) is lower than the transmission quality factor (Q7) of the other analog ping (6),
- deciding that a portable object (4) is present which is not a mobile phone and/or a portable object with a wireless charging coil (5) if the transmission quality factor (Q) after the stronger analog ping (7) is not smaller than the transmission quality factor (Q) of the other analog ping (6),
- sending with at least one coil (3) a digital ping (8) only after a decision that a portable object (4) is present which is a mobile phone and/or a portable object (4) with a wireless charging coil (5),
wherein the digital ping (8), if sent, is stronger than the first analog ping (6) and stronger than the second analog ping (7).

2. Method according to any of the preceding claims,
wherein the power (V1; V2) of the first second analog ping (6) and the power of the second analog ping (7) each are by a at least a factor of more than 10, especially by a factor of more than 30 lower than the power of the digital ping (8).

3. Method according to any of the preceding claims,
wherein the digital ping (8) is triggered with ~4.5V and the first analog ping (6) with less than 100mV and the second analog ping (7) with 0.3 - 0.8V.

4. Method according to any of the preceding claims,
wherein the power of the first and second analog ping (7) is set to a level reducing radio emissions below ICNIRP limits also if no smartphone and/or portable object (4) with a wireless charging coil (5) is present.

5. Method according to any of the preceding claims,
wherein the first analog ping (6) and the second analog ping (7) are narrower and/or lower (V1, V2) pulses than the digital ping (8),
especially wherein both (6, 7) are delta pulses.

6. Method according to any of the preceding claims,
wherein only in case of a decision that a portable object (4) is a mobile phone and/or a portable object (4) with a wireless charging coil (5),
and preferably after further verification and/or communication,
charging of the portable object (4) is started.

7. Device (2) for detecting the presence of a portable object (4) inside a vehicle (1) near the device (2), said device (2) being a charging station and comprising:
- a module (11, 10, 3, 2) for transmitting, with at least one coil (3), a first analog ping (6), and measuring a transmission parameter (Q6), **characterized by** comprising
- a module (11, 10, 3, 2) for transmitting with at least one coil (3) a second analog ping (7), which is stronger or weaker than the first analog ping (6),
- a module (11, 10, 3, 2) for comparing the transmission parameter (Q6) of the first analog ping (6) and the transmission parameter (Q7) of the second analog ping (7),
- a module (11, 10, 3, 2) for deciding that a portable object (4) is present which is a mobile phone and/or a portable object with a wireless charging coil (5), if the transmission parameter (Q7) of the stronger analog ping (7) is smaller than the transmission parameter (Q6) of the other analog ping (6),
- a module for deciding that a portable object (4) is present which is not a mobile phone and/or not a portable object with a wireless charging coil (5), if the transmission parameter (Q7) of the stronger analog ping (7) is bigger than or equal to the transmission parameter (Q6) of the other analog ping (6),
- a module (11, 10, 3, 2) for transmitting, with at least one coil (3), a digital ping (8) only after a decision that a portable object (4) is present which (4) is a mobile phone and/or a portable object with a wireless charging coil (5),
wherein the digital ping (8), if sent, is stronger than each of the first analog ping (6) and second analog ping (7).

8. Device according to the preceding claim,
wherein the measured (12) transmission parameter (Q6) of the first analog ping (6) is a Q quality factor (Q6) and wherein the measured (12) transmission parameter (Q6) of the second analog ping (7) a Q quality factor (Q7).

9. Device according any of the preceding claims 7-8,
wherein the power of the first analog ping (6) and the power of the second analog ping (7) each are by a at least a factor of more than 10, especially by a factor of more than 30 lower than the power of the digital ping (8), wherein preferably a digital ping (8) is triggered by ~4.5V and a first analog ping (6) with less than 100mV and a second analog ping (7) with 0.3 - 0.8V.

10. Device according any of the preceding claims 7-9
wherein a sent ping (8) is insofar stronger than another sent ping (6, 7) that it (8) is sent for a longer time (t) and/or sent with more power than the other sent ping (6, 7).

11. Device according any of the preceding claims 7-10,
wherein the first analog ping (6) and second analog ping (7) are shorter (t) pulses than the digital ping (8), especially delta pulses.

12. Device according any of the preceding claims 7-11
wherein either the transmission of the second analog ping (7) uses more power and/or time (t) than the transmission of the first analog ping (6), or the transmission of the first analog ping (6) uses more power and/or time (t) than the transmission of the second analog ping (7),
wherein the second analog ping (7) is sent before or after the transmission of the first analog ping (6).

## Patentansprüche

1. Verfahren zum Detektieren des Vorhandenseins eines tragbaren Gegenstands (4) in der Nähe einer Ladeeinrichtung in einem Fahrzeug (1),
wobei das Detektieren erzielt wird durch
- Senden mit wenigstens einer Spule (3) eines ersten analogen Ping (6),
**gekennzeichnet durch**
- Senden mit wenigstens einer Spule (3) eines zweiten analogen Ping (7), der eine andere Stärke als erste analoge Ping (6) hat,
- Vergleichen des Sendequalitätsfaktors (Q6) des ersten analogen Ping (6) mit dem Sendequalitätsfaktor (Q7) des zweiten analogen Ping (7),
- Entscheiden, dass ein tragbarer Gegenstand (4) vorhanden ist, der ein Mobiltelefon und/oder ein tragbarer Gegenstand mit einer Spule (5) zum drahtlosen Laden ist,
falls der Sendequalitätsfaktor (Q7) des stärkeren analogen Ping (7) kleiner als der Sendequalitätsfaktor (Q7) des anderen analogen Ping (6) ist,
- Entscheiden, dass ein tragbarer Gegenstand (4) vorhanden ist, der kein Mobiltelefon und/oder kein tragbarer Gegenstand mit einer Spule (5) zum drahtlosen Laden ist,
falls der Sendequalitätsfaktor (Q) des stärkeren analogen Ping (7) nicht kleiner als der Sendequalitätsfaktor (Q) des anderen analogen Ping (6) ist,
- Senden mit wenigstens einer Spule (3) eines digitalen Ping (8) nur nach einer Entscheidung, dass ein tragbarer Gegenstand (4) vorhanden ist, der ein Mobiltelefon und/oder ein tragbarer Gegenstand (4) mit einer Spule (5) zum drahtlosen Laden ist,
wobei der digitale Ping (8), falls er gesendet wird, stärker als der erste analoge Ping (6) und stärker als der zweite analoge Ping (7) ist.

2. Verfahren nach einem der vorhergehenden Ansprüche,
wobei die Leistung (V1; V2) des ersten analogen Ping (6) und die Leistung des zweiten analogen Ping (7) jeweils wenigstens um einen Faktor größer als 10, insbesondere um einen Faktor größer als 30 niedriger als die Leistung des digitalen Ping (8) sind.

3. Verfahren nach einem der vorhergehenden Ansprüche,
wobei der digitale Ping (8) mit ~4,5 V und der erste analoge Ping (6) mit weniger als 100 mV und der zweite analoge Ping (7) mit 0,3-0,8 V ausgelöst werden.

4. Verfahren nach einem der vorhergehenden Ansprüche,
wobei die Leistungen des ersten und des zweiten analogen Ping (7) auf einen Pegel eingestellt werden, bei dem die Funkemissionen unter ICNIRP-Grenzen reduziert werden, selbst wenn kein Smartphone und/oder kein tragbarer Gegenstand (4) mit einer Spule (5) zum drahtlosen Laden vorhanden sind.

5. Verfahren nach einem der vorhergehenden Ansprüche,
wobei der erste analoge Ping (6) und der zweite analoge Ping (7) schmalere und/oder niedrigere Impulse (V1, V2) als der digitale Ping (8) sind,
wobei insbesondere beide (6, 7) Deltaimpulse sind.

6. Verfahren nach einem der vorhergehenden Ansprüche,
wobei nur im Fall einer Entscheidung, dass ein tragbarer Gegenstand (4) ein Mobiltelefon und/oder ein tragbarer Gegenstand (4) mit einer Spule (5) zum drahtlosen Laden ist,
und vorzugsweise nach einer weiteren Verifikation und/oder Kommunikation das Laden des tragbaren Gegenstands (4) begonnen wird.

7. Vorrichtung (2) zum Detektieren des Vorhandenseins eines tragbaren Gegenstands (4) in einem Fahrzeug (1) in der Nähe der Vorrichtung (2), wobei die Vorrichtung (2) eine Ladestation ist und Folgendes umfasst:
- ein Modul (11, 10, 3, 2) zum Senden mit wenigstens einer Spule (3) eines ersten analogen Ping (6) und Messen eines Sendeparameters (Q6),
**gekennzeichnet durch**
- ein Modul (11, 10, 3, 2) zum Senden mit wenigstens eine Spule (3) eines zweiten analogen Ping (7), der stärker oder schwächer als der erste analoge Ping (6) ist,
- ein Modul (11, 10, 3, 2) zum Vergleichen des Sendeparameters (Q6) des ersten analogen Pin (6) mit dem Sendeparameter (Q7) des zweiten analogen Ping (7),
- ein Modul (11, 10, 3, 2) zum Entscheiden, dass ein tragbarer Gegenstand (4) vorhanden ist, der ein Mobiltelefon und/oder ein tragbarer Gegenstand mit einer Spule (5) zum drahtlosen Laden ist, falls der Sendeparameter (Q7) des stärkeren analogen Ping (7) kleiner als der Sendeparameter (Q6) des anderen analogen Ping (6) ist,
- ein Modul zum Entscheiden, dass ein tragbarer Gegenstand (4) vorhanden ist, der kein Mobiltelefon und/oder kein tragbarer Gegenstand mit einer Spule (5) zum drahtlosen Laden ist, falls der Sendeparameter (Q7) des stärkeren analogen Ping (7) größer oder gleich dem Sendeparameter (Q6) des anderen analogen Ping (6) ist,
- ein Modul (11, 10, 3, 2) zum Senden mit wenigstens einer Spule (3) eines digitalen Ping (8) nur nach einer Entscheidung, dass ein tragbarer Gegenstand (4) vorhanden ist, der (4) ein Mobiltelefon und/oder ein tragbarer Gegenstand mit einer Spule (5) zum drahtlosen Laden ist,
wobei der digitale Ping (8), falls er gesendet wird, stärker als der erste analoge Ping (6) und als der zweite analoge Ping (7) ist.

8. Vorrichtung nach dem vorhergehenden Anspruch,
wobei der gemessene (12) Sendeparameter (Q6)
des ersten analogen Ping (6) ein Q-Qualitätsfaktor (Q6) ist
und wobei der gemessene (12) Sendeparameter (Q6) des zweiten analogen Ping (7) ein Q-Qualitätsfaktor (Q7) ist.

9. Vorrichtung nach einem der vorhergehenden Ansprüche 7-8,
wobei die Leistung des ersten analogen Ping (6) und die Leistung des zweiten analogen Ping (7) jeweils wenigstens um einen Faktor größer als 10, insbesondere um einen Faktor größer als 30 niedriger als die Leistung des digitalen Ping (8) sind,
wobei vorzugsweise ein digitaler Ping (8) durch ~4,5 V und ein erster analoger Ping (6) mit weniger als 100 mV und ein zweiter analoger Ping (7) mit 0,3-0,8 V ausgelöst werden.

10. Vorrichtung nach einem der vorhergehenden Ansprüche 7-9,
wobei ein gesendeter Ping (8) insofern stärker als ein weiterer gesendeter Ping (6, 7) ist, als er (8) für eine längere Zeit (t) gesendet wird und/oder mit mehr Leistung als der andere gesendete Ping (6, 7) gesendet wird.

11. Vorrichtung nach einem der vorhergehenden Ansprüche 7-10,
wobei der erste analoge Ping (6) und der zweite analoge Ping (7) kürzere (t) Impulse sind als der digitale Ping (8) und insbesondere Deltaimpulse sind.

12. Vorrichtung nach einem der vorhergehenden Ansprüche 7-11,
wobei jedes Senden des zweiten analogen Ping (7) mehr Leistung und/oder Zeit (t) verwendet als das Senden des ersten analogen Ping (6),
oder das Senden des ersten analogen Ping (6) mehr Leistung und/oder Zeit (t) als das Senden des zweiten analogen Ping (7) verwendet,
wobei der zweite analoge Ping (7) vor oder nach dem Senden des ersten analogen Ping (6) gesendet wird.

## Revendications

1. Procédé de détection de la présence d'un objet portable (4) à proximité d'un chargeur à l'intérieur d'un véhicule (1),
la détection étant obtenue par
- la transmission, au moyen d'au moins une bobine (3), d'un premier ping analogique (6),
**caractérisé par**
- la transmission, au moyen d'au moins une bobine (3), d'un deuxième ping analogique (7) d'une puissance différente de celle du premier ping analogique (6),
- la comparaison du facteur de qualité de transmission (Q6) du premier ping analogique (6) et du facteur de qualité de transmission (Q7) du deuxième ping analogique (7),
- la détermination qu'un objet portable (4), qui est un téléphone mobile et/ou un objet portable pourvu d'une bobine de charge sans fil (5), est présent si le facteur de qualité de transmission (Q7) du ping analogique (7) plus puissant est inférieur au facteur de qualité de transmission (Q7) de l'autre ping analogique (6),
- la détermination qu'un objet portable (4), qui n'est pas un téléphone mobile et/ou un objet portable pourvu d'une bobine de charge sans fil (5), est présent si le facteur de qualité de transmission (Q) après le ping analogique (7) plus puissant n'est pas inférieur au facteur de qualité de transmission (Q) de l'autre ping analogique (6),
- l'envoi, au moyen d'au moins une bobine (3), d'un ping numérique (8) uniquement après la détermination qu'un objet portable (4), qui est un téléphone mobile et/ou un objet portable (4) pourvu d'une bobine de charge sans fil (5), est présent,
le ping numérique (8), s'il est envoyé, étant plus puissant que le premier ping analogique (6) et plus puissant que le deuxième ping analogique (7).

2. Procédé selon l'une quelconque des revendications précédentes,
la puissance (V1 ; V2) du premier ping analogique (6) et la puissance du deuxième ping analogique (7) étant chacune inférieures d'au moins un facteur de plus de 10, plus particulièrement d'un facteur de plus de 30, à la puissance du ping numérique (8).

3. Procédé selon l'une quelconque des revendications précédentes,
le ping numérique (8) étant déclenché avec environ 4,5 V et le premier ping analogique (6) avec moins de 100 mV et le deuxième ping analogique (7) avec 0,3 à 0,8 V.

4. Procédé selon l'une quelconque des revendications précédentes,
la puissance du premier et du deuxième ping analogique (7) étant fixée à un niveau réduisant les émissions radio sous les limites de l'ICNIRP également si aucun smartphone et/ou objet portable (4) pourvu d'un bobine de charge sans fil (5) n'est présent.

5. Procédé selon l'une quelconque des revendications précédentes,
le premier ping analogique (6) et le deuxième ping analogique (7) étant des impulsions plus étroites et/ou à (V1 ; V2) plus faibles que celles du ping numérique (8),
plus particulièrement, (6, 7) étant tous deux des impulsions delta.

6. Procédé selon l'une quelconque des revendications précédentes, uniquement en cas de détermination qu'un objet portable (4) est un téléphone mobile et/ou un objet portable (4) pourvu d'une bobine de charge sans fil (5),
et, de préférence, suite à une vérification et/ou une communication supplémentaires,
la charge de l'objet portable (4) étant amorcée.

7. Dispositif (2) de détection de la présence d'un objet portable (4) à l'intérieur d'un véhicule (1) à proximité du dispositif (2), ledit dispositif (2) étant une station de charge et comprenant :
- un module (11, 10, 3, 2) pour transmettre, au moyen d'au moins une bobine (3), un premier ping analogique (6), et mesurer un paramètre de transmission (Q6),
**caractérisé en ce qu'**il comprend
- un module (11, 10, 3, 2) pour transmettre, au moyen d'au moins une bobine (3), un deuxième ping analogique (7), qui est plus puissante ou moins puissant que le premier ping analogique (6),
- un module (11, 10, 3, 2) pour comparer le paramètre de transmission (Q6) du premier ping analogique (6) et le paramètre de transmission (Q7) du deuxième ping analogique (7),
- un module (11, 10, 3, 2) pour déterminer qu'un objet portable (4), qui est un téléphone mobile et/ou un objet portable pourvu d'une bobine de charge sans fil (5), est présent, si le paramètre de transmission (Q7) du ping analogique (7) plus puissant est inférieur au paramètre de transmission (Q6) de l'autre ping analogique (6),
- un module pour déterminer qu'un objet portable (4), qui n'est pas un téléphone mobile et/ou pas un objet portable pourvu d'une bobine de charge sans fil (5), est présent, si le paramètre de transmission (Q7) du ping analogique (7) plus puissant est supérieur ou égal au paramètre de transmission (Q6) de l'autre ping analogique (6),
- un module (11, 10, 3, 2) pour transmettre, au moyen d'au moins une bobine (3), un ping numérique (8) uniquement après la détermination qu'un objet portable (4), qui est un téléphone mobile et/ou un objet portable (4) pourvu d'une bobine de charge sans fil (5), est présent,
le ping numérique (8), s'il est envoyé, étant plus puissant que chacun des premier ping analogique (6) et deuxième ping analogique (7).

8. Dispositif selon la revendication précédente,
le paramètre de transmission (Q6) mesuré (12)
du premier ping analogique (6) étant un facteur de qualité Q (Q6) et le paramètre de transmission (Q6) mesuré (12) du deuxième ping analogique (7) étant un facteur de qualité Q (Q7).

9. Dispositif selon l'une quelconque des revendications 7 à 8,
la puissance du premier ping analogique (6) et la puissance du deuxième ping analogique (7) étant chacune inférieures d'au moins un facteur de plus de 10, plus particulièrement d'un facteur de plus de 30 à la puissance du ping numérique (8), le ping numérique (8) étant, de préférence, déclenché avec environ 4,5 V et un premier ping analogique (6) avec moins de 100 mV et un deuxième ping analogique (7) avec 0,3 à 0,8 V.

10. Dispositif selon l'une quelconque des revendications 7 à 9,
un ping (8) envoyé étant plus puissant qu'un autre ping (6, 7) envoyé dans la mesure où il (8) est envoyé pendant une plus longue durée (t) et/ou envoyé avec une plus grande puissance que celles de l'autre ping (6, 7) envoyé.

11. Dispositif selon l'une quelconque des revendications 7 à 10,
le premier ping analogique (6) et le deuxième ping analogique (7) étant des impulsions plus courtes (t) que celles du ping numérique (8), plus particulièrement des impulsions delta.

12. Dispositif selon l'une quelconque des revendications 7 à 11,
soit la transmission du deuxième ping analogique (7) faisant appel à une plus grande puissance et/ou une plus longue durée (t) que celles du premier ping analogique (6),
soit la transmission du premier ping analogique (6) faisant appel à une plus grande puissance et/ou une plus longue durée (t) que celles du deuxième ping analogique (7),
le deuxième ping analogique (7) étant envoyé avant ou après la transmission du premier ping analogique (6).
